# EUROPEAN PATENT APPLICATION

(11) **EP 4 507 353 A1**
(43) Date of publication of application: **12.02.2025**
(21) Application number: 22948692.3
(22) Date of filing: 01.07.2022
(51) Int. Cl.: H04W 12/06

(54) **SIGNAL TRANSMISSION METHOD, DEVICE AND SYSTEM**

(71) Applicant: Huawei Technologies Co., Ltd., Shenzhen, Guangdong 518129 (CN)
(72) Inventor: YU, Qian, Shenzhen, Guangdong 518129 (CN); HU, Shichang, Shenzhen, Guangdong 518129 (CN); MA, Chao, Shenzhen, Guangdong 518129 (CN)
(74) Representative: Maiwald GmbH
(86) International application number: PCT/CN2022/103457
(87) International publication number: WO 2024/000593

(57) **Abstract**

This application provides a signal transmission method, apparatus, and system. The method includes: sending a narrow band signal to a receive end, where the narrow band signal is used by the receive end to determine initial time - frequency synchronization information; and sending an ultra-wideband signal to the receive end, where the ultra-wideband signal includes a channel impulse response training sequence CTS field, and the CTS field is used by the receive end to determine a channel impulse response, where the CTS field includes at least one CTS symbol, and the CTS symbol includes at least one first preamble symbol or is generated by spreading at least one first preamble symbol. This application can reduce a chip area, operating power consumption, and operating costs of an ultra-wideband system while maintaining high-precision ranging by using the ultra-wideband system, and improve ranging efficiency.

## Description

### TECHNICAL FIELD

This application relates to the field of communication, and in particular, to a signal transmission method, apparatus, and system.

### BACKGROUND

Ultra-wideband (Ultra-wideband, UWB) wireless technology is a wireless carrier communication technology that uses a high frequency bandwidth, and transmits data by using a narrow time domain signal, and the signal has a strong resolution. Therefore, the UWB technology has a strong multipath resolution capability. High ranging precision can be ensured in complex multipath environment.

At present, in the ultra-wideband wireless technology, a high rate pulse repetition frequency (High rate pulse repetition frequency, HPR) UWB protocol in an Institute of Electrical and Electronics Engineers (Institute of Electrical and Electronics Engineers, IEEE) 802.15.4a/z standard is usually used for ranging and positioning. A signal format defined by the HPR UWB protocol supports data transmission and a ranging function. During signal transmission, an ultra-wideband system at a transmit end sends an ultra-wideband signal based on the signal format defined in the HPR UWB protocol, and the ultra-wideband system at a receive end performs ranging based on the received ultra-wideband signal.

However, a signal in the HPR UWB protocol supports data transmission and the ranging function. Therefore, an air transmission time of the signal is relatively long, and complexity of the ultra-wideband system is relatively high. As a result, the ultra-wideband system needs to run with high operating power consumption and high operating costs, which affects ranging efficiency.

### SUMMARY

This application provides a signal transmission method, apparatus, and system, to reduce a chip area, operating power consumption, and operating costs of an ultra-wideband system while maintaining high precision ranging by using the ultra-wideband system, and improve ranging efficiency.

According to a first aspect, this application provides a signal transmission method, where the method includes: sending a narrow band signal to a receive end, where the narrow band signal is used by the receive end to determine initial time-frequency synchronization information; and sending an ultra-wideband signal to the receive end, where the ultra-wideband signal includes a channel impulse response training sequence CTS field, and the CTS field is used by the receive end to determine a channel impulse response, where the CTS field includes at least one CTS symbol, and the CTS symbol includes at least one first preamble symbol or is generated by spreading at least one first preamble symbol.

There is a null signal interval between the ultra-wideband signal and the narrow band signal. A time length of the null signal interval may be user-defined. A specific value of the null signal interval is not limited in this embodiment of this application.

When the CTS symbol is generated by spreading the at least one first preamble symbol, a quantity of bits of a spreading code is the same as a quantity of first preamble symbols in the CTS field, and each first preamble symbol corresponds to one value in the spreading code. The at least one first preamble symbol may be separately multiplied by a corresponding value in the spreading code (spreading code), to obtain the CTS symbol. The spreading code is a sequence with a good correlation characteristic, for example, may be a binary (binary) sequence or a ternary (ternary) sequence.

In this method, the initial time-frequency synchronization information is determined by using the narrow band signal, and ranging is performed by using a structure of the ultra-wideband signal provided in this embodiment of this application. In this way, ranging is performed by combining narrow band with ultra-wideband. An ultra-wideband system does not need to determine the initial time-frequency synchronization information, which reduces the air transmission time of the ultra-wideband signal and the complexity of the ultra-wideband system. In this way, a chip area, operating power consumption, and operating costs of an ultra-wideband system are reduced while maintaining high-precision ranging by using the ultra-wideband system, and ranging efficiency is improved.

In a possible implementation, the ultra-wideband signal further includes a synchronization SYNC field; and the SYNC field is used by the receive end to determine target time-frequency synchronization information based on the initial time-frequency synchronization information, and the SYNC field includes at least one second preamble symbol.

The target time-frequency synchronization information is used for high-precision synchronization of the ultra-wideband signal, and there is a null signal interval between the SYNC field and a first CTS symbol of the CTS field. The time length of the null signal interval may be user-defined. A specific value of the null signal interval is not limited in this embodiment of this application.

The SYNC field may further implement high-precision synchronization of the CTS field of the ultra-wideband signal. Because accuracy of the channel impulse response is closely related to synchronization precision of the CTS field, high-precision synchronization can be implemented by using the SYNC field, to improve accuracy of the channel impulse response, thereby ensuring good ranging performance when ranging is performed by using the channel impulse response. In addition, synchronization precision of different narrow band systems is different, and the ultra-wideband system implements further synchronization on a basis of synchronization of the narrow band system based on the SYNC field, so that the ultra-wideband system can flexibly adapt to synchronization precision of the different narrow band systems, which improves feasibility and wide application of the method in this embodiment of this application.

In a possible implementation, the first preamble symbol includes a first preamble code or is generated by spreading a first preamble code, and the second preamble symbol includes a second preamble code or is generated by spreading a second preamble code.

The first preamble code (preamble code) or the second preamble code is a sequence with a good correlation characteristic, for example, may be a binary sequence or a ternary sequence. The first preamble code and the second preamble code are not limited in this embodiment of this application. A sequence with a good correlation characteristic is not easily interfered by an external signal, so that when a receive end subsequently determines a channel impulse response based on a CTS field, high precision of the channel impulse response can be maintained, thereby maintaining high-precision ranging of the ultra-wideband system. In addition, when the first preamble symbol is generated by spreading the first preamble code, the first preamble symbol is not easily interfered by an external signal and is unpredictable. Similarly, the second preamble code generated by spreading the second preamble code is not easily interfered by an external signal and is unpredictable, thereby improving an anti-interference capability and security of the ultra-wideband signal.

In a possible implementation, there are a plurality of CTS symbols, the plurality of CTS symbols form a plurality of CTS segments, and there is a null signal interval between any two CTS segments.

There is no signal transmission in a time period corresponding to the null signal interval. In this way, when the ultra-wideband signal is sent by using a pulse signal, a duty cycle of the pulse signal can be reduced, and transmit power of the ultra-wideband signal can be improved while a frequency band usage requirement of the ultra-wideband is met. An attenuation degree of the ultra-wideband signal in the transmission process is reduced, and a coverage area of the ultra-wideband signal is expanded.

According to a second aspect, this application provides a signal transmission method, where the method includes: determining initial time-frequency synchronization information based on a narrow band signal sent by a transmit end; receiving an ultra-wideband signal sent by the transmit end, where the ultra-wideband signal includes a channel impulse response training sequence CTS field, the CTS field includes at least one CTS symbol, and the CTS symbol includes at least one first preamble symbol or is generated by spreading at least one first preamble symbol; performing synchronization processing on the ultra-wideband signal based on the initial time-frequency synchronization information; and determining a channel impulse response based on the CTS field.

In a possible implementation, the receive end directly performs synchronization processing on the CTS field of the ultra-wideband signal based on the initial time-frequency synchronization information.

In a possible implementation, the ultra-wideband signal further includes a synchronization SYNC field, the SYNC field includes at least one second preamble symbol, and the performing synchronization processing on the ultra-wideband signal based on the initial time-frequency synchronization information includes: determining target time-frequency synchronization information based on the initial time-frequency synchronization information and the SYNC field; and performing synchronization processing on the ultra-wideband signal based on the target time-frequency synchronization information.

In a possible implementation, the first preamble symbol includes a first preamble code or is generated by spreading a first preamble code, and the second preamble symbol includes a second preamble code or is generated by spreading a second preamble code.

In a possible implementation, there are a plurality of CTS symbols, the plurality of CTS symbols form a plurality of CTS segments, and there is a null signal interval between any two CTS segments.

According to a third aspect, this application provides a signal transmission apparatus, where the apparatus includes: a first sending module, configured to send a narrow band signal to a receive end, where the narrow band signal is used by the receive end to determine initial time-frequency synchronization information; and a second sending module, configured to send an ultra-wideband signal to the receive end, where the ultra-wideband signal includes a channel impulse response training sequence CTS field, and the CTS field is used by the receive end to determine a channel impulse response, where the CTS field includes at least one CTS symbol, and the CTS symbol includes at least one first preamble symbol or is generated by spreading at least one first preamble symbol.

In a possible implementation, the ultra-wideband signal further includes a synchronization SYNC field; and the SYNC field is used by the receive end to determine target time-frequency synchronization information based on the initial time-frequency synchronization information, and the SYNC field includes at least one second preamble symbol.

In a possible implementation, the first preamble symbol includes a first preamble code or is generated by spreading a first preamble code, and the second preamble symbol includes a second preamble code or is generated by spreading a second preamble code.

In a possible implementation, there are a plurality of CTS symbols, the plurality of CTS symbols form a plurality of CTS segments, and there is a null signal interval between any two CTS segments.

According to a fourth aspect, this application provides a signal transmission apparatus, where the apparatus includes: a first determining module, configured to determine initial time-frequency synchronization information based on a narrow band signal sent by a transmit end; a receiving module, configured to receive an ultra-wideband signal sent by the transmit end, where the ultra-wideband signal includes a channel impulse response training sequence CTS field, the CTS field includes at least one CTS symbol, and the CTS symbol includes at least one first preamble symbol or is generated by spreading at least one first preamble symbol; a synchronization module, configured to perform synchronization processing on the ultra-wideband signal based on the initial time-frequency synchronization information; and a second determining module, configured to determine a channel impulse response based on the CTS field.

In a possible implementation, the ultra-wideband signal further includes a synchronization SYNC field, the SYNC field includes at least one second preamble symbol, and the synchronization module is specifically configured to: determine target time-frequency synchronization information based on the initial time-frequency synchronization information and the SYNC field; and perform synchronization processing on the ultra-wideband signal based on the target time-frequency synchronization information.

In a possible implementation, the first preamble symbol includes a first preamble code or is generated by spreading a first preamble code, and the second preamble symbol includes a second preamble code or is generated by spreading a second preamble code.

In a possible implementation, there are a plurality of CTS symbols, the plurality of CTS symbols form a plurality of CTS segments, and there is a null signal interval between any two CTS segments.

According to a fifth aspect, this application provides a signal transmission apparatus, where the apparatus includes: one or more processors; and a memory, configured to store one or more computer programs or instructions, the one or more computer programs or instructions, when executed by the one or more processors, causing the one or more processors to implement the method according to any implementation of the first aspect.

According to a sixth aspect, this application provides a signal transmission apparatus, where the apparatus includes: one or more processors; and a memory, configured to store one or more computer programs or instructions, the one or more computer programs or instructions, when executed by the one or more processors, causing the one or more processors to implement the method according to any implementation of the first aspect.

According to a seventh aspect, this application provides a signal transmission apparatus, including a processor, configured to perform the method according to any implementation of the first aspect.

According to an eighth aspect, this application provides a signal transmission apparatus, including a processor, configured to perform the method according to any implementation of the second aspect.

According to a ninth aspect, this application provides a signal transmission system, where the system includes: a transmit end and a receive end, where the transmit end includes the signal transmission apparatus according to any implementation of the third aspect, the signal transmission apparatus according to any implementation of the fifth aspect, or the signal transmission apparatus according to any implementation of the seventh aspect, and the receive end includes the signal transmission apparatus according to any implementation of the fourth aspect, the signal transmission apparatus according to any implementation of the sixth aspect, or the signal transmission apparatus according to any implementation of the eighth aspect.

According to a tenth aspect, this application provides a computer-readable storage medium, including a computer program or instructions, where when the computer program or the instructions are executed on a computer, the computer is enabled to perform the method according to any implementation of the first aspect and the second aspect.

### BRIEF DESCRIPTION OF DRAWINGS

FIG. 1 is a schematic flowchart of a signal transmission method according to an embodiment of this application;
FIG. 2 is a schematic flowchart of another signal transmission method according to an embodiment of this application;
FIG. 3 is a schematic flowchart of still another signal transmission method according to an embodiment of this application;
FIG. 4 is a schematic diagram of formats of a narrow band signal and an ultra-wideband signal according to an embodiment of this application;
FIG. 5 is a schematic diagram of a structure of an SYNC field according to an embodiment of this application;
FIG. 6 is a schematic diagram of a structure of a CTS field according to an embodiment of this application;
FIG. 7 is a schematic diagram of a structure of a CTS segment according to an embodiment of this application;
FIG. 8 is a block diagram of a signal transmission apparatus according to an embodiment of this application;
FIG. 9 is a block diagram of another signal transmission apparatus according to an embodiment of this application;
FIG. 10 is a schematic diagram of a structure of an electronic device according to an embodiment of this application; and
FIG. 11 is a schematic diagram of a structure of a signal transmission apparatus according to an embodiment of this application.

### DESCRIPTION OF EMBODIMENTS

To make objectives, technical solutions, and advantages of this application clearer, the following clearly and completely describes the technical solutions in this application with reference to the accompanying drawings in this application. Definitely, the described embodiments are merely a part rather than all of the embodiments of this application. All other embodiments obtained by a person of ordinary skill in the art based on the embodiments of this application without creative efforts shall fall within the protection scope of this application.

The terms "first", "second", and the like in embodiments of the specification, claims, and accompanying drawings of this application are merely used for the purpose of distinguishing description, and cannot be understood as indicating or implying relative importance, and cannot be understood as indicating or implying a sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that, in this application, "at least one " means one or more, and "a plurality of" means two or more. "And/or" is configured to describe an association relationship between associated objects and represents that three relationships may exist. For example, A and/or B may represent the following three cases: Only A exists, only B exists, and both A and B exist, where A and B may be singular or plural. The character "/" generally indicates an "or" relationship between the associated objects. "At least one of the following items" or a similar expression means any combination of these items, including a single item or any combination of a plurality of items. For example, at least one of a, b, or c may represent: a, b, c, "a and b", "a and c", "b and c", or "a and b and c", where a, b, and c may be one or more.

The ultra-wideband wireless technology uses a narrow time domain signal to transmit data. For example, in an impulse radio ultra-wideband (Impulse Radio UWB, IR-UWB), a narrow pulse signal at a nanosecond level are used to transmit data. The signal resolution is strong, and therefore the multipath resolution capability is strong. The centimeter-level ranging accuracy can be ensured in a complex multipath environment (such as an indoor environment). At present, an HPR UWB protocol in IEEE 802.15.4a/z is commonly used in the ultra-wideband technology.

The HPR UWB protocol defines a plurality of signal formats. The plurality of signal formats support data transmission and a ranging function, and a scrambled timestamp sequence (Scrambled timestamp sequence, STS) is added to the signal to ensure signal security. During signal transmission, an ultra-wideband system at a transmit end sends an ultra-wideband signal based on the signal format defined in the HPR UWB protocol, and the ultra-wideband system at a receive end performs ranging based on the received ultra-wideband signal.

However, the signal in the HPR UWB protocol supports data transmission and the ranging function. In this way, the efficiency of data transmission in the ultra-wideband system is low, and therefore the air transmission time of the signal is long. In addition, the ultra-wideband system needs more functional modules to implement data transmission and ranging, for example, time-frequency synchronization, CIR (Channel Impulse Response, Channel Impulse Response) estimation, and scrambling timestamp sequence (Scrambled timestamp sequence, STS) detection, data monitoring, and forward error correction (Forward Error Correction, FEC) decoding. As a result, the operating power consumption and operating costs of the ultra-wideband system are relatively high, and the ranging efficiency is affected.

Embodiments of this application provide a signal transmission method, to reduce operating power consumption and operating costs of an ultra-wideband system while maintaining high ranging precision of the ultra-wideband system. The method may be applied to a signal transmission system. The signal transmission system includes a transmit end and a receive end. Both the transmit end and the receive end include an ultra-wideband system and a narrow band (Narrow band, NB) system. The narrow band system uses a carrier signal with a narrow bandwidth to transmit data, which has the advantages of low operating power consumption and low operating costs. For example, the narrow band system may include: a wireless fidelity (wireless fidelity, WIFI) system, a Bluetooth, a ZigBee (ZigBee) system, and the like.

It should be noted that in embodiments of this application, a device configured to send a signal is referred to as a transmit end, and a device configured to receive a signal is referred to as a receive end. Alternatively, the transmit end may receive a signal, and the receive end may send a signal. A function of the device is not limited in embodiments of this application.

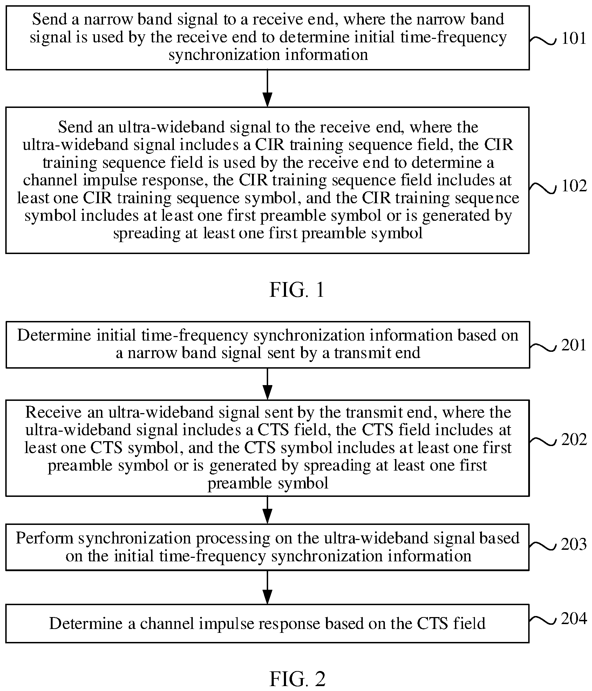

Refer to FIG. 1. FIG. 1 is a schematic flowchart of a signal transmission method according to an embodiment of this application. The method is applied to a transmit end in a signal transmission system, and the transmit end includes an ultra-wideband system and a narrow band system. The method may include the following procedure.

101. Send a narrow band signal to a receive end, where the narrow band signal is used by the receive end to determine initial time-frequency synchronization information.

The narrow band system at the transmit end sends a narrow band signal to the receive end. The narrow band signal may include a physical protocol data unit (Physical protocol data unit, PPDU).

102. Send an ultra-wideband signal to the receive end, where the ultra-wideband signal includes a CIR training sequence field, the CIR training sequence field is used by the receive end to determine a channel impulse response, the CIR training sequence field includes at least one CIR training sequence symbol, and the CIR training sequence symbol includes at least one first preamble symbol or is generated by spreading at least one first preamble symbol.

The ultra-wideband system at the transmit end sends the ultra-wideband signal to the receive end. The ultra-wideband signal is transmitted to the receive end in a narrow time domain signal form (for example, a narrow pulse form), and the ultra-wideband signal may include a PPDU. There is a null signal interval between the ultra-wideband signal and the narrow band signal. A time length of the null signal interval may be user-defined. A specific value of the null signal interval is not limited in this embodiment of this application.

When the CIR training sequence (CIR training sequence, CTS) field includes a plurality of CTS symbols, the plurality of CTS symbols may have a same CTS symbol, or may not have a same CTS symbol. When the CTS symbol includes a plurality of first preamble symbols, the plurality of first preamble symbols may have a same first preamble symbol, or may not have a same first preamble symbol.

Alternatively, the ultra-wideband signal may further include a synchronization (Synchronization, SYNC) field. The SYNC field is used by the receive end to determine target time-frequency synchronization information based on the initial time-frequency synchronization information, and the target time-frequency synchronization information is used for high-precision synchronization of the ultra-wideband signal. There is a null signal interval between the SYNC field and the first CTS symbol of the CTS field. The time length of the null signal interval may be user-defined. A specific value of the null signal interval is not limited in this embodiment of this application.

In conclusion, according to the signal transmission method provided in this embodiment of this application, a narrow band signal is sent to a receive end, where the narrow band signal is used by the receive end to determine initial time-frequency synchronization information, and then an ultra-wideband signal is sent to the receive end, where the ultra-wideband signal includes a CTS field. The CTS field includes at least one CTS symbol, the CTS symbol includes at least one first preamble symbol, or is generated by spreading the at least one first preamble symbol, and the CTS field is used by the receive end to determine a channel impulse response, to implement ranging. The initial time-frequency synchronization information is determined by using the narrow band signal, and ranging is performed by using a structure of the ultra-wideband signal provided in this embodiment of this application. In this way, ranging is performed by combining narrow band with ultra-wideband. In this process, the ultra-wideband system does not need to determine the initial time-frequency synchronization information, which reduces the air transmission time of the ultra-wideband signal and the complexity of the ultra-wideband system. In this way, a chip area, operating power consumption, and operating costs of the ultra-wideband system are reduced while maintaining high-precision ranging by using the ultra-wideband system, and ranging efficiency is improved.

Refer to FIG. 2. FIG. 2 is a schematic flowchart of another signal transmission method according to an embodiment of this application. The method is applied to a receive end in a signal transmission system, and the receive end includes an ultra-wideband system and a narrow band system. The method may include the following procedures.

201. Determine initial time-frequency synchronization information based on a narrow band signal sent by a transmit end.

The narrow band system at the receive end receives the narrow band signal, and determines the initial time-frequency synchronization information based on the narrow band signal.

202. Receive an ultra-wideband signal sent by the transmit end, where the ultra-wideband signal includes a CTS field, the CTS field includes at least one CTS symbol, and the CTS symbol includes at least one first preamble symbol or is generated by spreading at least one first preamble symbol.

203. Perform synchronization processing on the ultra-wideband signal based on the initial time-frequency synchronization information.

When the ultra-wideband signal does not include an SYNC field, the receive end directly performs synchronization processing on the CTS field of the ultra-wideband signal based on the initial time-frequency synchronization information. When the ultra-wideband signal further includes the SYNC field, the receive end may determine target time-frequency synchronization information based on the initial time-frequency synchronization information and the SYNC field, and then perform synchronization processing on the CTS field of the ultra-wideband signal based on the target time-frequency synchronization information.

Because the ultra-wideband system has a high bandwidth, a device needs to work at a high sampling rate, that is, the ultra-wideband system needs to work at a relatively high frequency. Therefore, compared with the narrow band system, the ultra-wideband system has a relatively high chip area, operating power consumption, and operating costs. In this embodiment of this application, the initial time-frequency synchronization information is determined by the narrow band system at the receive end, and the ultra-wideband system does not need to determine the initial time-frequency synchronization information. This effectively reduces the air transmission time of the ultra-wideband signal and complexity of the ultra-wideband system. Therefore, the chip area, operating power consumption, and operating costs of the ultra-wideband system are reduced, and the ranging efficiency is improved.

204. Determine a channel impulse response based on the CTS field.

The receive end may determine the channel impulse response based on the CTS field, to perform first-path monitoring, thereby implementing ranging.

In conclusion, according to the signal transmission method provided in this embodiment of this application, the receive end determines the initial time-frequency synchronization information based on the narrow band signal sent by the transmit end, and then receives an ultra-wideband signal sent by the transmit end, where the ultra-wideband signal includes a CTS field. The CTS field includes at least one CTS symbol, the CTS symbol includes at least one first preamble symbol or is generated by spreading the at least one first preamble symbol, and the receive end performs synchronization processing on the ultra-wideband signal based on the initial time-frequency synchronization information. Then, the channel impulse response is determined based on the CTS field of the ultra-wideband signal, and the ranging is realized. The initial time-frequency synchronization information is determined by using the narrow band signal, and ranging is performed by using a structure of the ultra-wideband signal provided in this embodiment of this application. In this way, ranging is performed by combining narrow band with ultra-wideband. In this process, the ultra-wideband system does not need to determine the initial time-frequency synchronization information, which reduces the air transmission time of the ultra-wideband signal and the complexity of the ultra-wideband system. In this way, a chip area, operating power consumption, and operating costs of the ultra-wideband system are reduced while maintaining high-precision ranging by using the ultra-wideband system, and ranging efficiency is improved.

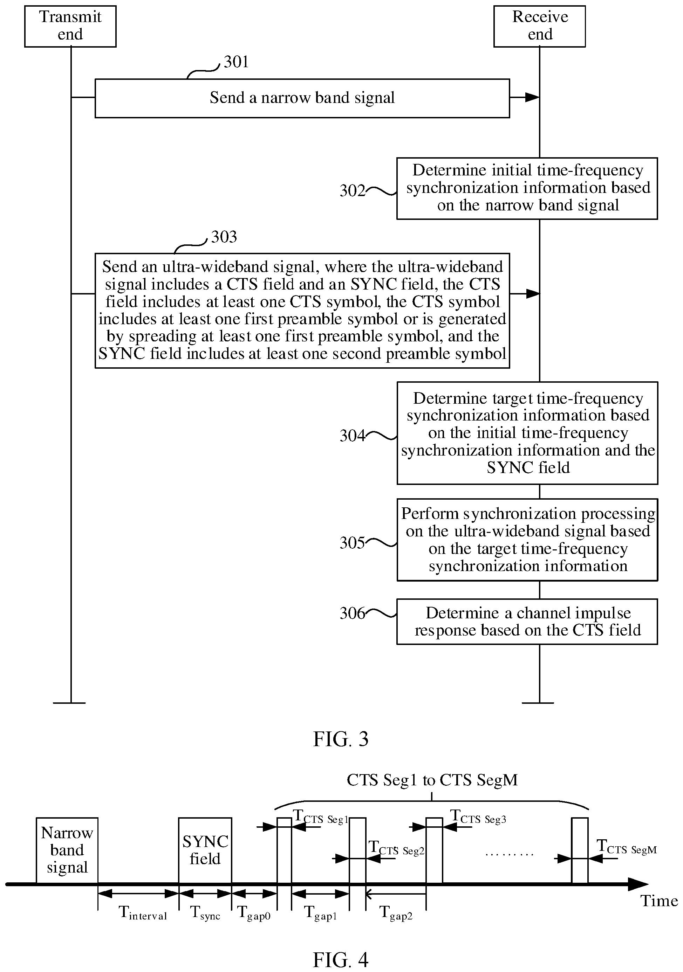

Refer to FIG. 3. FIG. 3 is a schematic flowchart of still another signal transmission method according to an embodiment of this application. In FIG. 3, an example in which an ultra-wideband signal includes a CTS field and an SYNC field is used for description. The method is applied to a signal transmission system, and the signal transmission system includes a transmit end and a receive end. Both the transmit end and the receive end include an ultra-wideband system and a narrow band system. The method may include the following procedures.

301. A transmit end sends a narrow band signal to a receive end.

A format (including a length, a field, and the like), an operating frequency band, a signal bandwidth, and the like of the narrow band signal are not limited in this embodiment of this application.

302. The receive end determines initial time-frequency synchronization information based on the narrow band signal.

The initial time-frequency synchronization information may include a sampling clock offset (sample clock offset, SCO) and/or a carrier frequency offset (Carrier Frequency Offset, CFO).

303. The transmit end sends an ultra-wideband signal to the receive end, where the ultra-wideband signal includes a CTS field and an SYNC field, the CTS field includes at least one CTS symbol, the CTS symbol includes at least one first preamble symbol or is generated by spreading the at least one first preamble symbol, and the SYNC field includes at least one second preamble symbol.

The first preamble symbol (preamble symbol) may include a first preamble code or be generated by spreading the first preamble code. The first preamble code is a sequence with a good correlation characteristic, for example, may be a binary sequence or a ternary sequence. The first preamble code is not limited in this embodiment of this application. A sequence with a good correlation characteristic is not easily interfered by an external signal, so that when a receive end subsequently determines a channel impulse response based on a CTS field, high precision of the channel impulse response can be maintained, thereby maintaining high-precision ranging of the ultra-wideband system. In addition, when the first preamble symbol is generated by spreading the first preamble code, the first preamble symbol is not easily interfered by an external signal and is unpredictable, thereby improving an anti-interference capability and security of the ultra-wideband signal.

When the first preamble symbol is generated by spreading the first preamble code, the first preamble code may be multiplied by the spreading code to obtain the first preamble symbol. A length of the spreading code is related to a length of the first preamble symbol. In this embodiment of this application, a quantity of bits of the spreading code is the same as a quantity of bits of the first preamble code, and values of the spreading code are in a one-to-one correspondence with values of the first preamble code. Each value in the first preamble code is multiplied by a corresponding value in the spreading code. The spreading code is a sequence with a good correlation characteristic, for example, may be a binary sequence or a ternary sequence. The spreading code may be randomly generated by the transmit end, or is selected from a plurality of pre-stored spreading codes. For example, the transmit end generates a codebook (codebook) including a plurality of spreading codes in advance, and the transmit end directly selects the spreading code from the codebook. A form, a length, an obtaining manner, and the like of the spreading code may be user-defined. This is not limited in this embodiment of this application.

When the CTS symbol is generated by spreading the at least one first preamble symbol, a quantity of bits of a spreading code is the same as a quantity of first preamble symbols in the CTS field, and each first preamble symbol corresponds to one value in the spreading code. The at least one first preamble symbol may be separately multiplied by a corresponding value in the spreading code, to obtain a CTS symbol. For a spreading manner of the spreading code and the at least one first preamble symbol, refer to the foregoing spreading of the first preamble code. Details are not described herein in this embodiment of this application. The CTS symbol obtained by using the spreading manner is unpredictable, which improves an anti-interference capability and security of the ultra-wideband signal.

When there are a plurality of CTS symbols, the plurality of CTS symbols may form a plurality of CTS segments (segments, Segs), there is a null signal interval between any two CTS segments, and no signal is transmitted in a time period corresponding to the null signal interval. The time length of the null signal interval may be user-defined. A specific value of the null signal interval is not limited in this embodiment of this application. When the quantity of CTS segments is greater than 2, there are a plurality of null signal intervals, and null signal intervals of a same time length may exist in the plurality of null signal intervals, or null signal intervals of a same time may not exist. In this way, when the ultra-wideband signal is sent by using a pulse signal, a duty cycle of the pulse signal can be reduced, and transmit power of the ultra-wideband signal can be improved while a frequency band usage requirement of the ultra-wideband is met. An attenuation degree of the ultra-wideband signal in the transmission process is reduced, and a coverage area of the ultra-wideband signal is expanded.

A length of the CTS field is determined based on a length and a quantity of CTS symbols and a time length of the null signal interval. The quantity of CTS symbols, a length of each CTS symbol, and the time length of the null signal interval may be user-defined. A specific value of the CTS field is not limited in this embodiment of this application.

The length of the SYNC field is determined by the quantity of second preamble symbols and the length of each second preamble symbol. The quantity of second preamble symbols and the length of each second preamble symbol may be user-defined. A specific value of the SYNC field is not limited in this embodiment of this application. The SYNC field and the CTS field may have a same preamble symbol, or may not have a same preamble symbol. When there are a plurality of second preamble symbols, the plurality of second preamble symbols may have a same second preamble symbol, or may not have a same second preamble symbol.

The second preamble symbol may include a second preamble code, or is generated by spreading the second preamble code. The second preamble code may be a sequence with a good correlation characteristic, for example, may be a binary sequence or a ternary sequence. A form of the second preamble code is not limited in this embodiment of this application. For a spreading manner of the second preamble symbol, refer to the first preamble code. Details are not described herein in this embodiment of this application.

A length of the entire ultra-wideband signal is determined by the length of the SYNC field, the time length of the null signal interval between the SYNC field and the CTS field, and the length of the CTS field. The ultra-wideband signal is used for subsequent ranging, and the length of the ultra-wideband signal is related to a coverage area of subsequent ranging and a ranging frequency. The length of the SYNC field and the time length of a null signal interval between the SYNC field and the CTS field may be user-defined. In this way, the ultra-wideband signal can support requirements on ranging coverage and ranging frequency in different ranging scenarios. For example, when the ranging coverage area needs to be increased, the length of the ultra-wideband signal may be increased.

For example, refer to FIG. 4. FIG. 4 is a schematic diagram of formats of a narrow band signal and an ultra-wideband signal according to an embodiment of this application. In FIG. 4, an example in which a CTS field includes M CTS segments: CTS Seg1 to CTS SegM is used for description. FIG. 4 shows time lengths of a narrow band signal and an ultra-wideband signal in a transmission process. As shown in FIG. 4, T_{sync} indicates a time length of an SYNC field in the ultra-wideband signal, and the SYNC field is transmitted in a time period of T_{sync}. T_{CTS SegX} indicates a time length of CTS SegX. The CTS SegX is transmitted in a time period of T_{CTS SegX}, and 1≤X≤M.

Tᵢₙₜₑᵣᵥₐₗ indicates a time length of a null signal interval between a narrow band signal and an ultra-wideband signal (or an SYNC field). T_{gap0} indicates a time length of a null signal interval between the SYNC field and a first CTS symbol (or CTS Seg1) of the CTS field. There is a null signal interval between every two CTS segments in the CTS field. There are M-1 null signal intervals in the CTS field. T_{gapY} indicates a time length of a null signal interval between CTS SegY and CTS SegY+1, and 1≤Y≤M-1. No signal is transmitted during the time periods of Tᵢₙₜₑᵣᵥₐₗ, T_{gap0}, and T_{gapY}.

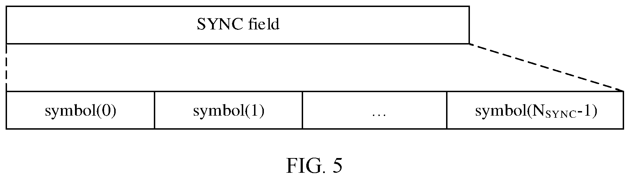

The following uses FIG. 5 to FIG. 7 as an example to describe a specific structure of a field in an ultra-wideband signal. Refer to FIG. 5. FIG. 5 is a schematic diagram of a structure of an SYNC field according to an embodiment of this application. As shown in FIG. 5, the SYNC field includes N_{SYNC} second preamble symbols: symbols (0) to symbols (N_{SYNC}-1), and N_{SYNC} is a positive integer greater than 2.

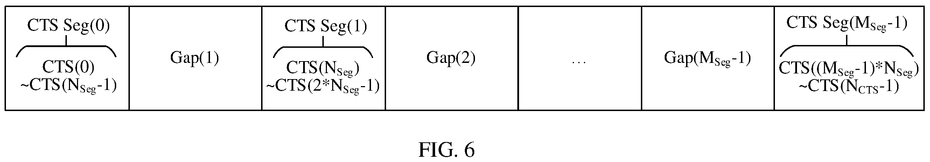

Refer to FIG. 6. FIG. 6 is a schematic diagram of a structure of a CTS field according to an embodiment of this application. As shown in FIG. 6, the CTS field includes N_{CTS} CTS symbols: CTS (0) to CTS (N_{CTS}-1), and N_{CTS} is a positive integer greater than 2. The N_{CTS} CTS symbols form M_{Seg} CTS segments: CTS Seg (0) to CTS Seg (M_{Seg}-1), each CTS segment includes N_{Seg} CTS symbols, M_{Seg} is a positive integer greater than 3, and N_{Seg} is a positive integer. For example, the CTS Seg (0) includes N_{Seg} CTS symbols: CTS (0) to CTS (N_{Seg}-1), and the CTS Seg (1) includes N_{Seg} CTS symbols: CTS (N_{Seg}) to CTS (2*N_{Seg}-1). The CTS Seg (M_{Seg}-1) includes N_{Seg} CTS symbols: CTS ((M_{Seg}-1)*N_{Seg}) to CTS (N_{CTS}-1). There is a null signal interval between any two CTS segments. For example, there is a Gap (1) between CTS Seg (0) and CTS Seg (1), there is a Gap (2) between CTS Seg (1) and CTS Seg (2), and there is a Gap (M_{Seg}-1) between CTS Seg (M_{Seg}-2) and CTS Seg (M_{Seg}-1).

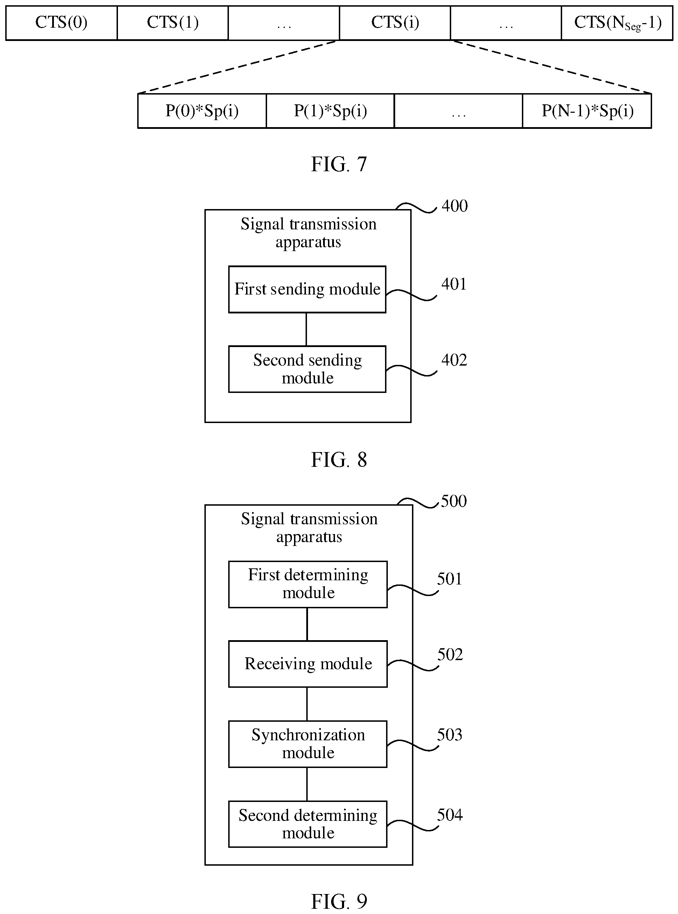

Refer to FIG. 7. FIG. 7 is a schematic diagram of a structure of a CTS segment according to an embodiment of this application. In FIG. 7, a CTS Seg (0) in FIG. 6 is used as an example. An example in which a CTS symbol in the CTS Seg (0) is generated by spreading a first preamble symbol is used for description. As shown in FIG. 7, the CTS Seg (0) includes N_{Seg} CTS symbols: CTS (0) to CTS (N_{Seg}-1), and the N_{Seg} CTS symbols are obtained by multiplying first N_{Seg} values in the spreading code by corresponding first preamble symbols. FIG. 7 shows a specific structure of CTS (i) in the N_{Seg} CTS symbols, and the CTS(i) is obtained by spreading the first preamble symbol by using a pseudo-random sequence. Each value P (0) to P(N-1) in the first preamble symbol is multiplied by an i^{th} value Sp(i) in the spreading code to obtain CTS (i).

It should be noted that in this embodiment of this application, the spreading code used for spreading the first preamble code, the spreading code used for spreading the second preamble code, and the spreading code used for spreading the first preamble symbol may be the same or different. This is not limited in this embodiment of this application.

304. The receive end determines target time-frequency synchronization information based on the initial time-frequency synchronization information and the SYNC field.

305. The receive end performs synchronization processing on the ultra-wideband signal based on the target time-frequency synchronization information.

The receive end synchronizes the CTS field of the ultra-wideband signal based on the target time-frequency synchronization information. The receive end may further implement high-precision synchronization of the CTS field based on the SYNC field. When an ultra-wideband system determines a channel impulse response based on the CTS field, accuracy of the channel impulse response is closely related to synchronization precision of the CTS field. However, due to the limitation of bandwidth and clock frequency, the synchronization precision of a narrow band systems is low. The receive end can further implement high-precision synchronization of the CTS field based on the SYNC field, thereby ensuring accuracy of a subsequently determined channel impulse response, and ensuring good ranging performance when ranging is performed by using the channel impulse response. In addition, synchronization precision of different narrow band systems is different, and the ultra-wideband system implements further synchronization on a basis of synchronization of the narrow band system based on the SYNC field, so that the ultra-wideband system can flexibly adapt to synchronization precision of the different narrow band systems, which improves feasibility and wide application of the method in this embodiment of this application.

306. The receive end determines a channel impulse response based on the CTS field.

In conclusion, according to the signal transmission method provided in this embodiment of this application, a receive end determines initial time-frequency synchronization information based on a narrow band signal sent by a transmit end, and then the transmit end sends an ultra-wideband signal to the receive end, where the ultra-wideband signal includes a CTS field and an SYNC field. The CTS field includes at least one CTS symbol, the CTS symbol includes at least one first preamble symbol or is generated by spreading the at least one first preamble symbol, and the SYNC field includes at least one second preamble symbol. The receive end determines target time-frequency synchronization information based on the initial time-frequency synchronization information and the SYNC field, performs synchronization processing on the ultra-wideband signal based on the target time-frequency synchronization information, and then determines a channel impulse response based on the CTS field of the ultra-wideband signal, to implement ranging. The initial time-frequency synchronization information is determined by using the narrow band signal, and high-precision synchronization and ranging are performed by using a structure of the ultra-wideband signal provided in this embodiment of this application. In this way, ranging is performed by combining narrow band with ultra-wideband. In this process, the ultra-wideband system does not need to determine the initial time-frequency synchronization information, which reduces the air transmission time of the ultra-wideband signal and the complexity of the ultra-wideband system. In this way, a chip area, operating power consumption, and operating costs of the ultra-wideband system are reduced while maintaining high-precision ranging by using the ultra-wideband system, and ranging efficiency is improved.

In addition, the receive end may further implement high-precision synchronization of the CTS field of the ultra-wideband signal based on the SYNC field. Because accuracy of the channel impulse response is closely related to synchronization precision of the CTS field, high-precision synchronization can be implemented by using the SYNC field, to improve accuracy of the channel impulse response, thereby ensuring good ranging performance when ranging is performed by using the channel impulse response. In addition, synchronization precision of different narrow band systems is different, and the ultra-wideband system implements further synchronization on a basis of synchronization of the narrow band system based on the SYNC field, so that the ultra-wideband system can flexibly adapt to synchronization precision of the different narrow band systems, which improves feasibility and wide application of the method in this embodiment of this application.

In addition, a length of the entire ultra-wideband signal is determined by the length of the SYNC field, the time length of the null signal interval between the SYNC field and the CTS field, and the length of the CTS field. The length of the ultra-wideband signal is related to the ranging coverage area and the ranging frequency. The length of the SYNC field and the time length of the null signal interval between the SYNC field and the CTS field can be user-defined. In this way, the ultra-wideband signal can support requirements on ranging coverage and ranging frequency in different ranging scenarios.

A sequence of the methods provided in embodiments of this application may be properly adjusted, or a process may be correspondingly increased or decreased based on a situation. Any variation method readily figured out by a person skilled in the art within the technical scope disclosed in this application shall fall within the protection scope of this application. This is not limited in this embodiment of this application.

The foregoing mainly describes the signal transmission method provided in embodiments of this application from a perspective of interaction between devices. It may be understood that, to implement the foregoing functions, each device includes a corresponding hardware structure and/or a corresponding software module for performing each function. A person skilled in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In this embodiment of this application, functional modules of each device may be divided based on the foregoing method example. For example, each functional module may be divided based on each function, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in an actual implementation.

FIG. 8 is a block diagram of a signal transmission apparatus according to an embodiment of this application. For example, the signal transmission apparatus may be a transmit end, or may be a chip in the signal transmission apparatus, or another combined device or component that has a function of the foregoing signal transmission apparatus. When each functional module is divided corresponding to each function, a signal transmission apparatus 400 includes:
a first sending module 401, configured to send a narrow band signal to a receive end, where the narrow band signal is used by the receive end to determine initial time-frequency synchronization information; and
a second sending module 402, configured to send an ultra-wideband signal to the receive end, where the ultra-wideband signal includes a channel impulse response training sequence CTS field, and the CTS field is used by the receive end to determine a channel impulse response, where
the CTS field includes at least one CTS symbol, and the CTS symbol includes at least one first preamble symbol or is generated by spreading at least one first preamble symbol.

With reference to the foregoing solution, the ultra-wideband signal further includes a synchronization SYNC field; and the SYNC field is used by the receive end to determine target time-frequency synchronization information based on the initial time-frequency synchronization information, and the SYNC field includes at least one second preamble symbol.

With reference to the foregoing solution, there are a plurality of CTS symbols, the plurality of CTS symbols form a plurality of CTS segments, and there is a null signal interval between any two CTS segments.

With reference to the foregoing solution, the first preamble symbol includes a first preamble code or is generated by spreading a first preamble code, and the second preamble symbol includes a second preamble code or is generated by spreading a second preamble code.

FIG. 9 is a block diagram of another signal transmission apparatus according to an embodiment of this application. For example, the signal transmission apparatus may be a receive end, or may be a chip in the signal transmission apparatus, or another combined device or component that has a function of the foregoing signal transmission apparatus. When each functional module is divided corresponding to each function, a signal transmission apparatus 500 includes:
a first determining module 501, configured to determine initial time-frequency synchronization information based on a narrow band signal sent by a transmit end;
a receiving module 502, configured to receive an ultra-wideband signal sent by the transmit end, where the ultra-wideband signal includes a channel impulse response training sequence CTS field, the CTS field includes at least one CTS symbol, and the CTS symbol includes at least one first preamble symbol or is generated by spreading at least one first preamble symbol;
a synchronization module 503, configured to perform synchronization processing on the ultra-wideband signal based on the initial time-frequency synchronization information; and
a second determining module 504, configured to determine a channel impulse response based on the CTS field.

With reference to the foregoing solution, the ultra-wideband signal further includes a synchronization SYNC field, the SYNC field includes at least one second preamble symbol, and the synchronization module 503 is specifically configured to: determine target time-frequency synchronization information based on the initial time-frequency synchronization information and the SYNC field; and perform synchronization processing on the ultra-wideband signal based on the target time-frequency synchronization information.

With reference to the foregoing solution, there are a plurality of CTS symbols, the plurality of CTS symbols form a plurality of CTS segments, and there is a null signal interval between any two CTS segments.

With reference to the foregoing solution, the first preamble symbol includes a first preamble code or is generated by spreading a first preamble code, and the second preamble symbol includes a second preamble code or is generated by spreading a second preamble code.

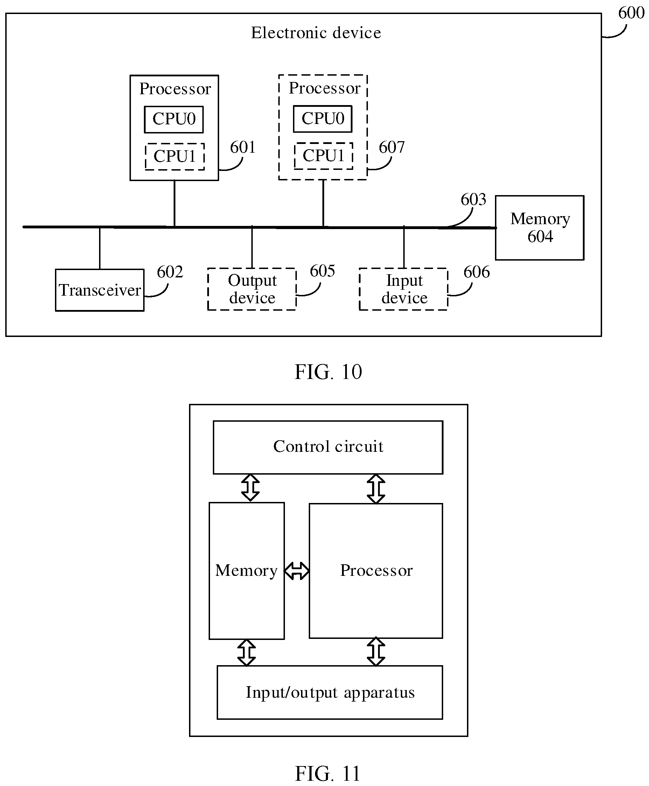

FIG. 10 is a schematic diagram of a structure of an electronic device according to an embodiment of this application. An electronic device 600 may be a transmit end or a receive end, or a chip or a functional module in the transmit end or the receive end. As shown in FIG. 10, the electronic device 600 includes a processor 601, a transceiver 602, and a communication line 603.

The processor 601 is configured to perform any step in the method embodiments shown in FIG. 1 to FIG. 3, and when performing a process such as sending a narrow band signal to a receive end, the processor 601 may choose to invoke the transceiver 602 and the communication line 603 to complete a corresponding operation.

Further, the electronic device 600 may further include a memory 604. The processor 601, the memory 604, and the transceiver 602 may be connected by using the communication line 603.

The processor 601 is a processor, a general-purpose processor network processor (network processor, NP), a digital signal processing (digital signal processing, DSP), a microprocessor, a microcontroller, a programmable logic device (programmable logic device, PLD), or any combination thereof. Alternatively, the processor 601 may be another apparatus having a processing function, for example, a circuit, a component, or a software module. This is not limited.

The transceiver 602 is configured to communicate with another device or another communication network. The another communication network may be an Ethernet, a radio access network (radio access network, RAN), a wireless local area network (wireless local area network, WLAN), or the like. The transceiver 602 may be a module, a circuit, a transceiver, or any apparatus that can implement communication.

The transceiver 602 is mainly configured to send and receive data, and may include a transmitter and a receiver, which respectively send and receive a signal. Operations other than signal transmission and reception are implemented by the processor, such as information processing and calculation.

The communication line 603 is configured to transmit information between components included in the electronic device 600.

In a design, the processor may be considered as a logic circuit, and the transceiver may be considered as an interface circuit.

The memory 604 is configured to store instructions. The instructions may be computer programs.

The memory 604 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory 604 may also be a compact disc read-only memory (compact disc read-only memory, CD-ROM) or other optical disk storage, an optical disk storage (including a compact disc, a laser disc, a compact disc, a digital versatile disc, a Blu-ray disc, and the like), a disk storage media, or other magnetic storage devices. It should be noted that the memory of the systems and methods described in this specification includes but is not limited to these and any memory of another proper type.

It should be noted that the memory 604 may exist independently of the processor 601, or may be integrated with the processor 601. The memory 604 may be configured to store instructions, program code, some data, or the like. The memory 604 may be located in the electronic device 600, or may be located outside the electronic device 600. This is not limited. The processor 601 is configured to execute the instructions stored in the memory 604, to implement the method provided in the foregoing embodiment of this application.

In an example, the processor 601 may include one or more processors, for example, a processor 0 and a processor 1 in FIG. 10.

In an optional implementation, the electronic device 600 includes a plurality of processors. For example, in addition to the processor 601 in FIG. 10, the electronic device 600 may further include a processor 607.

In an optional implementation, the electronic device 600 further includes an output device 605 and an input device 606. For example, the input device 606 is a device such as a keyboard, a mouse, a microphone, or a joystick, and the output device 605 is a device such as a display or a speaker (speaker).

It should be noted that the electronic device 600 may be a chip system or a device with a structure similar to that in FIG. 10. The chip system may include a chip, or may include a chip and another discrete device. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited. In addition, the composition structure shown in FIG. 10 does not constitute a limitation on the electronic device 600. In addition to the components shown in FIG. 10, the electronic device 600 may include more or fewer components than those shown in FIG. 10, or combine some components, or have different component arrangements.

The processors and the transceivers described in this application may be implemented on an integrated circuit (integrated circuit, IC), an analog IC, a radio frequency integrated circuit, a hybrid signal IC, an application specific integrated circuit (application specific integrated circuit, ASIC), a printed circuit board (printed circuit board, PCB), an electronic device, or the like. The processor and the transceiver may be manufactured by using various IC processing technologies, for example, a complementary metal oxide semiconductor (complementary metal oxide semiconductor, CMOS), an n metal-oxide-semiconductor (n Metal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

FIG. 11 is a schematic diagram of a structure of a signal transmission apparatus according to an embodiment of this application. The signal transmission apparatus is applicable to the scenario shown in the foregoing method embodiment. For ease of description, FIG. 11 shows only main components of the signal transmission apparatus, including a processor, a memory, a control circuit, and an input/output apparatus. The processor is mainly configured to process a communication protocol and communication data, execute a software program, and process data of the software program. The memory is mainly configured to store a software program and data. The control circuit is mainly used for power supply and transmission of various electrical signals. The input/output apparatus is mainly configured to receive data input by a user and output data to the user.

When the signal transmission apparatus is a transmit end or a receive end, the control circuit may be a main board, the memory includes a medium that has a storage function, such as a hard disk, a RAM, and a ROM, and the processor may include a baseband processor and a central processing unit. The baseband processor is mainly configured to process a communication protocol and communication data. The central processing unit is mainly configured to control the whole signal transmission apparatus, execute a software program, and process data of the software program. The input/output apparatus includes a display, a keyboard, a mouse, and the like. The control circuit may further include or be connected to a transceiver circuit or a transceiver, for example, a network cable interface, configured to send or receive data or a signal, for example, transmit data and communicate with other devices. Further, the control circuit may further include an antenna, configured to transmit and receive a wireless signal, and configured to transmit data/signals with another device.

According to the method provided in embodiments of this application, this application further provides a computer program product. The computer program product includes computer program code. When the computer program code runs on a computer, the computer is enabled to perform the method in any one of embodiments of this application.

An embodiment of this application further provides a computer-readable storage medium. All or a part of the processes in the foregoing method embodiments may be completed by executing a computer program or instructions by a computer or an apparatus having an information processing capability, to control related hardware. The computer program or the group of instructions may be stored in the foregoing computer-readable storage medium. When the computer program or the group of instructions is executed, the procedures in the foregoing method embodiments may be included. The computer-readable storage medium may be an internal storage unit of the server in any one of the foregoing embodiments, for example, a hard disk or a memory of the server. The foregoing computer-readable storage medium may also be an external storage device of the foregoing server, for example, a plug-in hard disk, a smart media card (smart media card, SMC), a secure digital (secure digital, SD) card, a flash card (flash card), or the like that are provided on the foregoing server. Further, the computer-readable storage medium may further include both the internal storage unit of the server and the external storage device. The computer-readable storage medium is configured to store the computer program or the instructions, and other programs and data required by the server. The computer-readable storage medium may be further configured to temporarily store data that has been output or is to be output.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (a personal computer, a server, a network device, or the like) to perform all or a part of the steps of the methods described in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, wherein the method comprises:
sending a narrow band signal to a receive end, wherein the narrow band signal is used by the receive end to determine initial time-frequency synchronization information; and
sending an ultra-wideband signal to the receive end, wherein the ultra-wideband signal comprises a channel impulse response training sequence CTS field, and the CTS field is used by the receive end to determine a channel impulse response, wherein
the CTS field comprises at least one CTS symbol, and the CTS symbol comprises at least one first preamble symbol or is generated by spreading at least one first preamble symbol.

2. The method according to claim 1, wherein the ultra-wideband signal further comprises a synchronization SYNC field; and
the SYNC field is used by the receive end to determine target time-frequency synchronization information based on the initial time-frequency synchronization information, and the SYNC field comprises at least one second preamble symbol.

3. The method according to claim 2, wherein the first preamble symbol comprises a first preamble code or is generated by spreading a first preamble code, and the second preamble symbol comprises a second preamble code or is generated by spreading a second preamble code.

4. The method according to any one of claims 1 to 3, wherein there are a plurality of CTS symbols, the plurality of CTS symbols form a plurality of CTS segments, and there is a null signal interval between any two CTS segments.

5. A signal transmission method, wherein the method comprises:
determining initial time-frequency synchronization information based on a narrow band signal sent by a transmit end;
receiving an ultra-wideband signal sent by the transmit end, wherein the ultra-wideband signal comprises a channel impulse response training sequence CTS field, the CTS field comprises at least one CTS symbol, and the CTS symbol comprises at least one first preamble symbol or is generated by spreading at least one first preamble symbol;
performing synchronization processing on the ultra-wideband signal based on the initial time-frequency synchronization information; and
determining a channel impulse response based on the CTS field.

6. The method according to claim 5, wherein the ultra-wideband signal further comprises a synchronization SYNC field, the SYNC field comprises at least one second preamble symbol, and the performing synchronization processing on the ultra-wideband signal based on the initial time-frequency synchronization information comprises:
determining target time-frequency synchronization information based on the initial time-frequency synchronization information and the SYNC field; and
performing synchronization processing on the ultra-wideband signal based on the target time-frequency synchronization information.

7. The method according to claim 6, wherein the first preamble symbol comprises a first preamble code or is generated by spreading a first preamble code, and the second preamble symbol comprises a second preamble code or is generated by spreading a second preamble code.

8. The method according to any one of claims 5 to 7, wherein there are a plurality of CTS symbols, the plurality of CTS symbols form a plurality of CTS segments, and there is a null signal interval between any two CTS segments.

9. A signal transmission apparatus, wherein the apparatus comprises:
a first sending module, configured to send a narrow band signal to a receive end, wherein the narrow band signal is used by the receive end to determine initial time-frequency synchronization information; and
a second sending module, configured to send an ultra-wideband signal to the receive end, wherein the ultra-wideband signal comprises a channel impulse response training sequence CTS field, and the CTS field is used by the receive end to determine a channel impulse response, wherein
the CTS field comprises at least one CTS symbol, and the CTS symbol comprises at least one first preamble symbol or is generated by spreading at least one first preamble symbol.

10. A signal transmission apparatus, wherein the apparatus comprises:
a first determining module, configured to determine initial time-frequency synchronization information based on a narrow band signal sent by a transmit end;
a receiving module, configured to receive an ultra-wideband signal sent by the transmit end, wherein the ultra-wideband signal comprises a channel impulse response training sequence CTS field, the CTS field comprises at least one CTS symbol, and the CTS symbol comprises at least one first preamble symbol or is generated by spreading at least one first preamble symbol;
a synchronization module, configured to perform synchronization processing on the ultra-wideband signal based on the initial time-frequency synchronization information; and
a second determining module, configured to determine a channel impulse response based on the CTS field.

11. A signal transmission apparatus, wherein the apparatus comprises:
one or more processors; and
a memory, configured to store one or more computer programs or instructions,
the one or more computer programs or instructions, when executed by the one or more processors, causing the one or more processors to implement the method according to any one of claims 1 to 4.

12. A signal transmission apparatus, wherein the apparatus comprises:
one or more processors; and
a memory, configured to store one or more computer programs or instructions,
the one or more computer programs or instructions, when executed by the one or more processors, causing the one or more processors to implement the method according to any one of claims 5 to 8.

13. A signal transmission system, wherein the system comprises: a transmit end and a receive end, wherein
the transmit end comprises the signal transmission apparatus according to claim 9 or the signal transmission apparatus according to claim 11, and the receive end comprises the signal transmission apparatus according to claim 10 or the signal transmission apparatus according to claim 12.
